# EUROPEAN PATENT APPLICATION

(11) **EP 4 512 645 A1**
(43) Date of publication of application: **26.02.2025**
(21) Application number: 24184834.0
(22) Date of filing: 26.06.2024
(51) Int. Cl.: B60K 1/00, B60K 15/05

(54) **ELECTRIC WORK VEHICLE**

(30) Priority: 03.07.2023 JP 2023109579
(71) Applicant: Kubota Corporation, Osaka-shi, Osaka 556-8601 (JP)
(72) Inventor: ONO, Kohei, SAKAI-SHI, OSAKA, 5900908 (JP); ODAGIRI, Makoto, SAKAI-SHI, OSAKA, 5900908 (JP)
(74) Representative: Cabinet Beau de Loménie

(57) **Abstract**

An electric work vehicle includes a hood (4) in a front portion of a body and a driving section (5) behind the hood (4). The electric work vehicle includes a connector section (39) to which a charger is connected to charge a battery, and the connector section (39) is in a front portion of the hood (4).

## Description

### Technical Field

The present invention relates to a configuration relating to charging of a battery in an electric work vehicle.

### Background Art

In an electric tractor, which is an example of an electric work vehicle, a hood is often provided in a front portion of a body, and a driving section is often provided behind the hood.

In such an electric tractor, a connector section to which a charger of an external power source (a charger included in an external power source facility) is connected to charge a battery may be provided on a lateral side of a steering wheel in the driving section as disclosed in Patent Document 1.

### Prior Art Document

### Patent Document

Patent Document 1: JP 2022-60665A

### Disclosure of the Invention

### Problem to be Solved by the Invention

In many cases, a work device such as a front loader is attached to the body of an electric tractor to perform work. In this case, portions of the work device such as a front loader may be located on the right side and the left side of the driving section.

If portions of a work device are located on the right side and the left side of the driving section in the electric tractor disclosed in Patent Document 1, it may be difficult to connect the charger of the external power source to the connector section due to the work device, and therefore, there is still room for improvement.

An object of the present invention is to configure an electric work vehicle in such a manner that a charger of an external power source can be easily connected to a connector section.

### Means for Solving Problem

An electric work vehicle according to an aspect of the present invention includes: a body provided with a travel device; a battery; a motor configured to operate with power supplied from the battery and supply motive power to the travel device; a hood in a front portion of the body; a driving section behind the hood; and a connector section to which a charger is connected to charge the battery, wherein the connector section is in a front portion of the hood.

According to this aspect of the present invention, the connector section is disposed in the front portion of the hood, and therefore, a worker can connect the charger to the connector section to charge the battery while standing in front of the body. Therefore, even if portions of a work device attached to the body are located on the right side and the left side of the driving section, the worker can easily connect the charger to the connector section without being affected by the work device. Consequently, workability of charging work can be improved.

In an aspect of the present invention, it is preferable that the battery is within the hood.

According to this aspect of the present invention, the connector section is disposed in the front portion of the hood and the battery is disposed within the hood, and therefore, the connector section is close to the battery. With this configuration, it is possible to reduce the length of a harness or the like connecting the connector section and the battery, and accordingly, it is possible to simplify the structure.

In an aspect of the present invention, it is preferable that the hood includes a top portion, a front face portion, a right side face portion, and a left side face portion, a right headlight and a left headlight are provided in a right region and a left region of an upper portion of the front face portion, respectively, and the connector section is disposed between the right headlight and the left headlight and oriented in such a manner that the charger is connected along a front-rear direction.

If an electric work vehicle includes a hood that includes a top portion, a front face portion, a right side face portion, and a left side face portion, a right headlight and a left headlight may be provided in a right region and a left region of an upper portion of the front face portion of the hood.

According to this aspect of the present invention, the connector section is disposed between the right headlight and the left headlight in this configuration and oriented in such a manner that the charger is connected in such a manner as to extend along the front-rear direction. Therefore, the worker can easily connect the charger to the connector section while standing in front of the body, and this configuration is advantageous in improving workability of the charging work.

In an aspect of the present invention, it is preferable that the connector section is within the hood and the front face portion includes a cover portion at a position corresponding to the connector section, the cover portion being openable and closable and configured to allow the charger to be connected to the connector section.

According to this aspect of the present invention, the connector section is disposed within the hood and covered by the hood and the cover portion, and therefore, it is possible to suppress intrusion of rain water into the connector section and attachment of dust to the connector section, for example, and accordingly, it is possible to suppress damage to the connector section.

When the worker connects the charger to the connector section, the worker can connect the charger to the connector section without difficulty by opening the cover portion, and therefore, this configuration does not impair workability.

In an aspect of the present invention, it is preferable that the hood includes a top portion, a front face portion, a right side face portion, and a left side face portion, and the connector section is disposed in a front portion of the top portion and oriented in such a manner that the charger is connected along a front-rear direction or an up-down direction.

According to this aspect of the present invention, the hood includes the top portion, the front face portion, the right side face portion, and the left side face portion, and the connector section is disposed in the front portion of the top portion of the hood. Also, the connector section is oriented in such a manner that the charger is connected in such a manner as to extend along the front-rear direction or the up-down direction. Therefore, the worker can easily connect the charger to the connector section while standing in front of the body, and this configuration is advantageous in improving workability of the charging work.

In an aspect of the present invention, it is preferable that the connector section is within the hood and the top portion includes a cover portion at a position corresponding to the connector section, the cover portion being openable and closable and configured to allow the charger to be connected to the connector section.

According to this aspect of the present invention, the connector section is disposed within the hood and covered by the hood and the cover portion, and therefore, it is possible to suppress intrusion of rain water into the connector section and attachment of dust to the connector section, for example, and accordingly, it is possible to suppress damage to the connector section.

When the worker connects the charger to the connector section, the worker can connect the charger to the connector section without difficulty by opening the cover portion, and therefore, this configuration does not impair workability.

In an aspect of the present invention, it is preferable that the hood includes a top portion, a front face portion, a right side face portion, and a left side face portion, and the connector section is disposed in a lower region of a front portion of the right side face portion or a lower region of a front portion of the left side face portion and oriented in such a manner that the charger is connected along a left-right direction.

According to this aspect of the present invention, the hood includes the top portion, the front face portion, the right side face portion, and the left side face portion, and the connector section is disposed in the lower region of the front portion of the right side face portion (or the left side face portion) of the hood and oriented in such a manner that the charger is connected in such a manner as to extend along the left-right direction. Therefore, the worker can easily connect the charger to the connector section while standing in front of the body, and this configuration is advantageous in improving workability of the charging work.

In the production of work vehicles, electric work vehicles may be produced by installing a battery and a motor on the body, and engine work vehicles may be produced by installing an engine on the body. In the production of engine work vehicles, an exhaust port of an exhaust pipe extending from the engine may be disposed in the lower region of the front portion of the right side face portion (or the left side face portion) of the hood.

According to this aspect of the present invention, the lower region of the front portion of the right side face portion (or the left side face portion) of the hood can be used as a region for disposing the connector section as well as a region for disposing the exhaust port of the exhaust pipe, and therefore, it is possible to simplify the structure.

In an aspect of the present invention, it is preferable that the connector section is within the hood and the right side face portion or the left side face portion includes a cover portion at a position corresponding to the connector section, the cover portion being openable and closable and configured to allow the charger to be connected to the connector section.

According to this aspect of the present invention, the connector section is disposed within the hood and covered by the hood and the cover portion, and therefore, it is possible to suppress intrusion of rain water into the connector section and attachment of dust to the connector section, for example, and accordingly, it is possible to suppress damage to the connector section.

When the worker connects the charger to the connector section, the worker can connect the charger to the connector section without difficulty by opening the cover portion, and therefore, this configuration does not impair workability.

### Brief Description of the Drawings

FIG. 1 is a left side view of a tractor.
FIG. 2 is a front view of the tractor.
FIG. 3 is a longitudinal cross-sectional view showing arrangement of a connector section, a battery, a motor, etc., as viewed from the left side.
FIG. 4 is a plan view showing the vicinity of the connector section and the battery.
FIG. 5 is a longitudinal cross-sectional view showing the vicinity of the connector section and the battery as viewed from the left side in a first variation of the invention.
FIG. 6 is a plan view showing the vicinity of the connector section and the battery in the first variation of the invention.
FIG. 7 is a longitudinal cross-sectional view showing the vicinity of the connector section and the battery as viewed from the left side in a second variation of the invention.
FIG. 8 is a plan view showing the vicinity of the connector section and the battery in the second variation of the invention.

### Best Mode for Carrying out the Invention

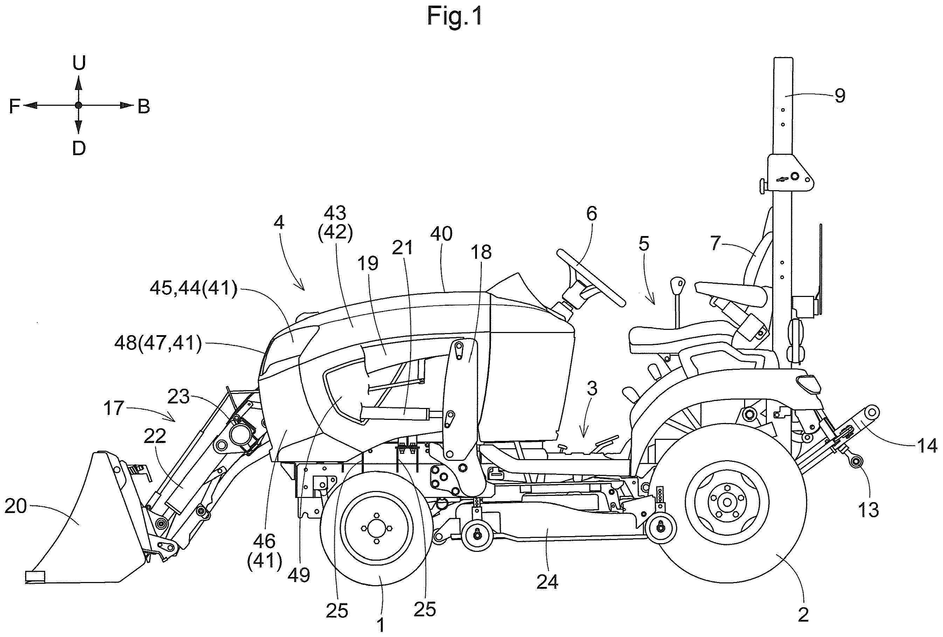

FIGS. 1 to 8 show a tractor, which is an example of an electric work vehicle. In FIGS. 1 to 8, F indicates the front side, B indicates the rear side, U indicates the upper side, D indicates the lower side, R indicates the right side, and L indicates the left side.

### Overall configuration of tractor

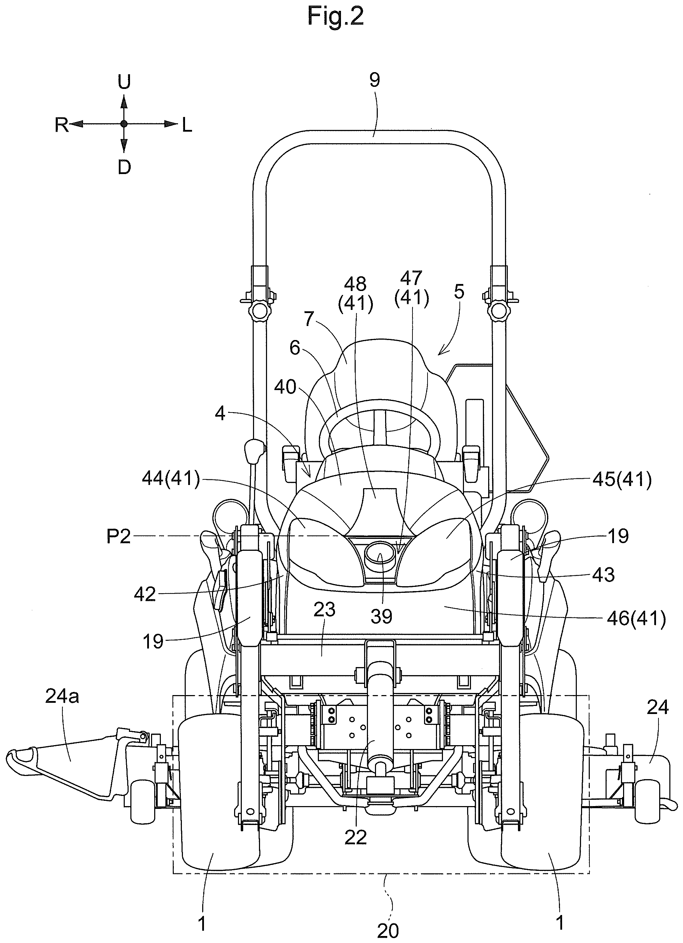

As shown in FIGS. 1 and 2, right and left front wheels 1 (corresponding to travel devices) and right and left rear wheels 2 (corresponding to travel devices) are attached to a body 3. A hood 4 is provided in a front portion of the body 3, and a driving section 5 is provided in a rear portion of the body 3. The driving section 5 includes a steering wheel 6 for changing orientations of the front wheels 1, a driver's seat 7, and a ROPS frame 9.

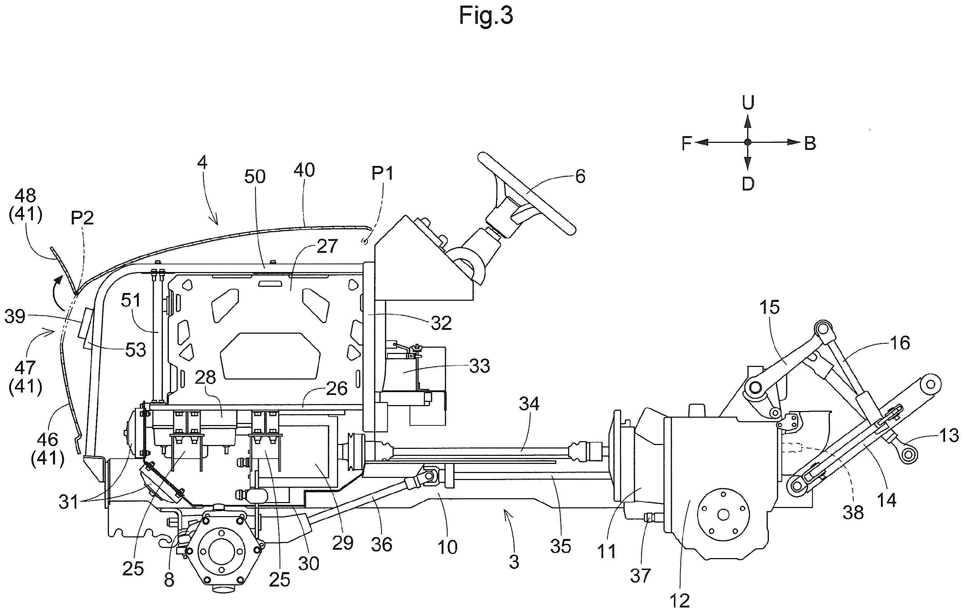

As shown in FIGS. 1 and 3, the body 3 includes right and left body frames 10, a continuously variable transmission 11, a transmission case 12, etc. The continuously variable transmission 11 is coupled to a front portion of the transmission case 12. The body frames 10 are coupled to the continuously variable transmission 11 and the transmission case 12 and extend along the front-rear direction. A front wheel shaft case 8 is attached to front portions of the body frames 10. The front wheels 1 are attached to the front wheel shaft case 8. The rear wheels 2 are attached to the transmission case 12.

A single top link 13 and right and left lower links 14 are attached to a rear portion of the transmission case 12 in such a manner as to be swingable in the up-down direction. Right and left lift arms 15 are provided on the rear portion of the transmission case 12. Rods 16 are connected to the lift arms 15 and the lower links 14.

Various work devices (not shown) can be attached to the top link 13 and the lower links 14. A work device is lifted and lowered via the top link 13 and the lower links 14 by operating the lift arms 15 so as to swing in the up-down direction.

### Configuration of front loader

As shown in FIGS. 1 and 2, a front loader 17 is attached to the front portion of the body 3. The front loader 17 includes base portions 18, booms 19, a bucket 20, boom cylinders 21, a bucket cylinder 22, a frame 23, etc.

The right and left base portions 18 are coupled to the body frames 10 and extend upward on the right side and the left side of a rear portion of the hood 4. The right and left booms 19 are attached to respective upper portions of the base portions 18 in such a manner as to be swingable in the up-down direction and extend forward. The right and left boom cylinders 21 are attached to the base portions 18 and the booms 19. The booms 19 are lifted and lowered by the boom cylinders 21.

The bucket 20 is attached to front portions of the booms 19 in such a manner as to be swingable in the up-down direction. The frame 23 is coupled to the right and left booms 19. The bucket cylinder 22 is connected to the bucket 20 and the frame 23. The bucket 20 is caused to perform a scooping operation and a dumping operation by the bucket cylinder 22.

### Configuration of mower

As shown in FIGS. 1 and 2, a mower 24 is attached to the body frames 10 in such a manner as to be capable of being lifted and lowered and is disposed between the front wheels 1 and the rear wheels 2.

The mower 24 includes three blades (not shown) disposed side by side in the left-right direction within the mower 24, and each blade is driven to rotate about an axis extending in the up-down direction. Grass reaped by the blades is discharged rightward from a discharge section 24a on the right side of the mower 24.

### Configuration of front portion of body

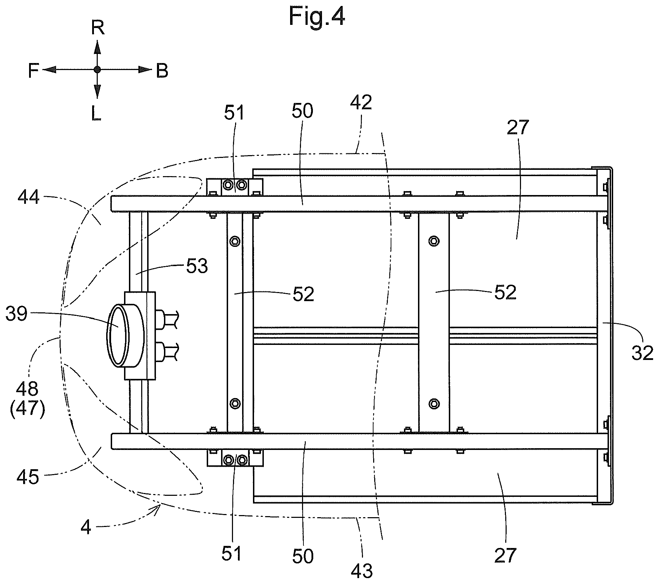

As shown in FIGS. 3 and 4, a battery 27, an inverter 28, a motor 29, a battery 33, etc., are provided on the front portions of the body frames 10.

Right and left support members 25 (see FIG. 1) are coupled to the front portions of the body frames 10. A flat plate-shaped support frame 26 is coupled to the support members 25. The battery 27 is attached to an upper surface portion of the support frame 26. The battery 27 is disposed within the hood 4.

The inverter 28 is attached to a front region of a lower surface portion of the support frame 26. The motor 29 is attached to a rear region of the lower surface portion of the support frame 26 and disposed between the right and left body frames 10.

The inverter 28 and the motor 29 are covered by a lower cover 30 from below. Fans 31 are attached to a front portion of the lower cover 30. Outside air is introduced into the inside of the lower cover 30 by the fans 31 to cool the inverter 28 and the motor 29 with the outside air.

An arch-shaped frame 32 is coupled to the right and left body frames 10 at a position corresponding to a rear end portion of the hood 4. The battery 33, which outputs 12 V power, is attached to the frame 32.

Power is supplied from the battery 27 to the inverter 28, the DC power supplied from the battery 27 is converted to AC power in the inverter 28, and the AC power is supplied to the motor 29 to cause the motor 29 to operate.

Power is supplied from the battery 27 to a DC-DC converter (not shown), and the voltage of the supplied power is reduced to 12 V in the DC-DC converter. The power with the reduced voltage of 12 V is supplied to the battery 33. Various devices (not shown) installed in the tractor operate with the 12 V power supplied from the battery 33.

Configuration of transmission system for front wheels, rear wheels, and mower

As shown in FIG. 3, motive power is transmitted from the motor 29 via a transmission shaft 34 to the continuously variable transmission 11. The continuously variable transmission 11 is a hydraulic transmission and capable of changing the speed of the motive power in a stepless manner in a forward traveling direction and a rearward traveling direction.

Motive power subjected to the speed change in the continuously variable transmission 11 is transmitted via an auxiliary transmission (not shown) and a rear wheel differential device (not shown) provided within the transmission case 12 to the rear wheels 2. Motive power diverging from a position right before the rear wheel differential device is transmitted via transmission shafts 35 and 36 to a front wheel differential device (not shown) provided within the front wheel shaft case 8, and transmitted from the front wheel differential device to the front wheels 1.

A PTO shaft 37 is provided in a lower region of the front portion of the transmission case 12 in such a manner as to face forward. A PTO shaft 38 is provided on the rear portion of the transmission case 12 in such a manner as to face rearward. Motive power that is transmitted by the transmission shaft 34 and not subjected to the speed change in the continuously variable transmission 11 is transmitted to the PTO shafts 37 and 38, and a hydraulic pump (not shown) is driven by the motive power not subjected to the speed change in the continuously variable transmission 11.

Motive power is transmitted from the PTO shaft 37 via a transmission shaft (not shown) to the mower 24. Motive power is transmitted from the PTO shaft 38 via a transmission shaft (not shown) to the work device attached to the top link 13 and the lower links 14. The boom cylinders 21 and the bucket cylinder 22 included in the front loader 17 and a hydraulic cylinder (not shown) for swinging the lift arms 15 are operated with hydraulic oil supplied from the hydraulic pump.

### Correspondence with claims regarding battery

According to the above configuration, the tractor includes: the body 3 provided with the travel devices (the front wheels 1 and the rear wheels 2); and the battery 27. The tractor also includes the motor 29 configured to operate with power supplied from the battery 27 and supply motive power to the travel devices (the front wheels 1 and the rear wheels 2).

The tractor also includes the hood 4 in the front portion of the body 3 and the driving section 5 behind the hood 4. The battery 27 is within the hood 4.

### Configuration of hood

As shown in FIGS. 1 to 4, the hood 4 includes a top portion 40, a front face portion 41, a right side face portion 42, and a left side face portion 43 that are formed as a single piece from a synthetic resin. The hood 4 is attached to the frame 32 in such a manner as to be swingable about an axis P1 extending in the left-right direction and capable of being operated to a closed position (see FIGS. 1, 2, and 3) and an open position spaced upward from the closed position.

A front grill 46 including a large number of small openings is provided in a lower portion of the front face portion 41, a front portion of the right side face portion 42, and a front portion of the left side face portion 43 of the hood 4. The front grill 46 is a part of the front face portion 41 of the hood 4, a part of the right side face portion 42 of the hood 4, and a part of the left side face portion 43 of the hood 4.

A right headlight 44 and a left headlight 45 are respectively provided in a right region and a left region of an upper portion of the front face portion 41 of the hood 4. Side grills 49 including a large number of small openings are provided in the right side face portion 42 and the left side face portion 43 of the hood 4.

The front face portion 41 of the hood 4 includes an opening 47 between the right headlight 44 and the left headlight 45. A cover portion 48 is attached to the front face portion 41 of the hood 4 (an upper edge of the opening 47) in such a manner as to be swingable about an axis P2 extending in the left-right direction. The cover portion 48 can be operated to a closed position (see FIG. 1) and an open position (see FIGS. 2 and 3).

Configuration of connector section to which charger of external power source is connected to charge battery

As shown in FIGS. 3 and 4, right and left frames 50 that have an angular shape in a side view are coupled to front end portions of the body frames 10 and the frame 32 within the hood 4 and disposed above and in front of the battery 27.

Right and left frames 51 extending in the up-down direction are coupled to a front portion of the support frame 26 and front regions of respective upper portions of the frames 50 within the hood 4 and disposed in front of the battery 27. A frame 52 extending in the left-right direction is coupled to the respective upper portions of the right and left frames 50 and disposed above the battery 27.

As shown in FIGS. 2, 3, and 4, a frame 53 extending in the left-right direction is coupled to upper regions of respective front portions of the right and left frames 50 within the hood 4. A connector section 39 is attached to a center portion of the frame 53 in the left-right direction. The connector section 39 faces forward behind the opening 47 of the front face portion 41 of the hood 4. When the cover portion 48 is operated to the closed position (see FIG. 1), the connector section 39 is covered by the cover portion 48 and is not exposed to the front side of the hood 4.

When the cover portion 48 is operated to the open position (see FIGS. 2 and 3), the connector section 39 is exposed to the front side of the hood 4 via the opening 47 of the hood 4. A worker connects a charger (not shown) of an external power source (not shown) to the connector section 39 via the opening 47 of the hood 4 from the front side of the hood 4. Accordingly, the charger of the external power source is connected to the connector section 39 in such a manner as to extend along the front-rear direction, and the battery 27 is charged with power supplied from the external power source via the connector section 39.

### Correspondence with claims regarding connector section

According to the above configuration, the tractor includes the connector section 39 to which a charger is connected to charge the battery 27, and the connector section 39 is disposed in a front portion of the hood 4.

The hood 4 includes the top portion 40, the front face portion 41, the right side face portion 42, and the left side face portion 43. The right headlight 44 and the left headlight 45 are provided in the right region and the left region of the upper portion of the front face portion 41. The connector section 39 is disposed between the right headlight 44 and the left headlight 45 and oriented in such a manner that the charger is connected along the front-rear direction.

The connector section 39 is within the hood 4. The front face portion 41 includes the cover portion 48 at a position corresponding to the connector section 39, and the cover portion 48 is openable and closable and allows the charger to be connected to the connector section 39.

### First variation of embodiment of the invention

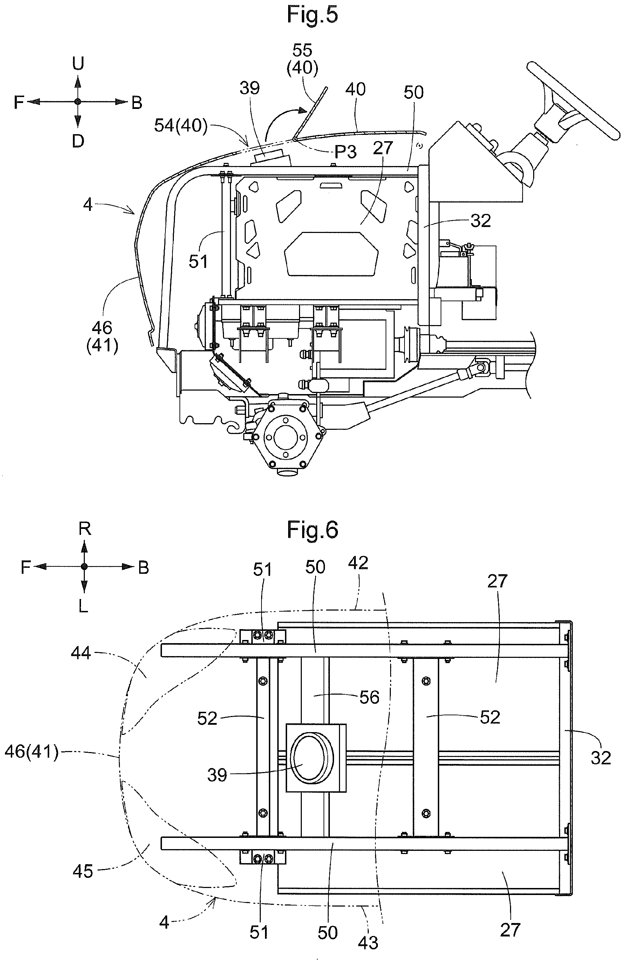

As shown in FIGS. 5 and 6, an opening 54 is provided in a center region in the left-right direction of a front portion of the top portion 40 of the hood 4. A cover portion 55 is attached to the front portion of the top portion 40 (a rear edge of the opening 54) of the hood 4 in such a manner as to be swingable about an axis P3 extending in the left-right direction. The cover portion 55 can be operated to a closed position and an open position (see FIG. 5).

A frame 56 extending in the left-right direction is coupled to the front regions of the respective upper portions of the right and left frames 50 within the hood 4. The connector section 39 is attached to a center portion of the frame 56 in the left-right direction. The connector section 39 faces upward under the opening 54 of the hood 4. When the cover portion 55 is operated to the closed position, the connector section 39 is covered by the cover portion 55 and is not exposed to the upper side of the hood 4.

When the cover portion 55 is operated to the open position (see FIG. 5), the connector section 39 is exposed to the upper side of the hood 4 via the opening 54 of the hood 4. The worker connects the charger (not shown) of the external power source (not shown) to the connector section 39 via the opening 54 of the hood 4 from the upper side of the hood 4. Accordingly, the charger of the external power source is connected to the connector section 39 in such a manner as to extend along the up-down direction, and the battery 27 is charged with power supplied from the external power source via the connector section 39.

In FIGS. 5 and 6, the connector section 39 may also be attached to the frame 56 in such a manner as to face diagonally upward and forward. According to this configuration, the charger of the external power source is connected to the connector section 39 in such a manner as to extend in the front-rear direction via the opening 54 of the hood 4 from the upper side and the front side of the hood 4.

Correspondence with claims regarding connector section in first variation of embodiment of invention

According to the above configuration, the tractor includes the connector section 39 to which a charger is connected to charge the battery 27, and the connector section 39 is disposed in the front portion of the hood 4.

The hood 4 includes the top portion 40, the front face portion 41, the right side face portion 42, and the left side face portion 43. The connector section 39 is disposed in the front portion of the top portion 40 and oriented in such a manner that the charger is connected along the front-rear direction or the up-down direction.

The connector section 39 is within the hood 4. The top portion 40 includes the cover portion 55 at a position corresponding to the connector section 39, and the cover portion 55 is openable and closable and allows the charger to be connected to the connector section 39.

### Second variation of embodiment of the invention

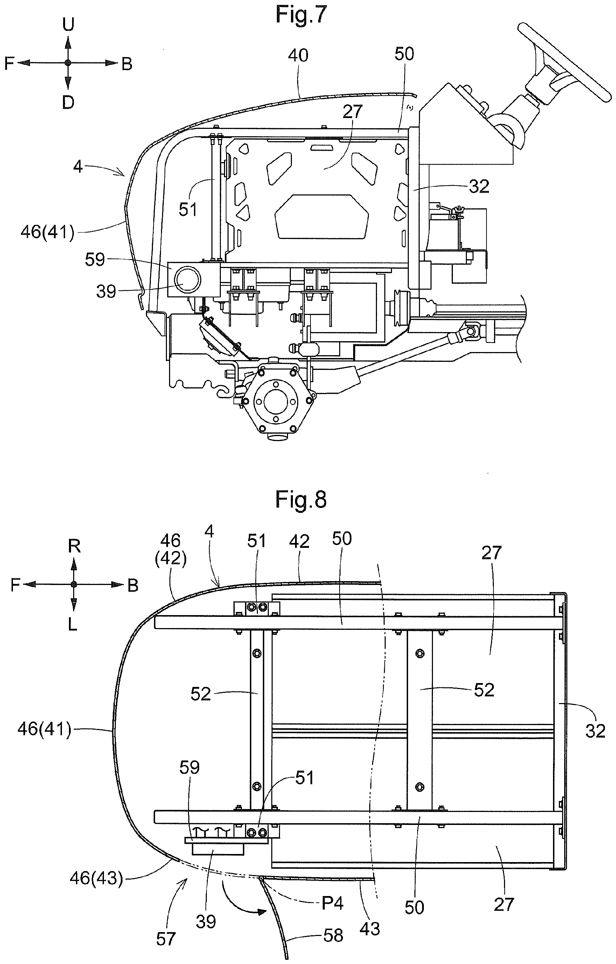

As shown in FIGS. 7 and 8, an opening 57 is provided in the front portion of the left side face portion 43 (a lower region of a left portion of the front grill 46) of the hood 4. A cover portion 58 is attached to a lower region of the front portion of the left side face portion 43 (the lower region of the left portion of the front grill 46) (a rear edge of the opening 57) of the hood 4 in such a manner as to be swingable about an axis P4 extending in the up-down direction. The cover portion 58 can be operated to a closed position and an open position (see FIG. 8).

A bracket 59 is coupled to a lower portion of the left frame 51 within the hood 4, and the connector section 39 is attached to the bracket 59. The connector section 39 faces leftward and is disposed on the right side of the opening 57 of the hood 4. When the cover portion 58 is operated to the closed position, the connector section 39 is covered by the cover portion 58 and is not exposed to the left side of the hood 4.

When the cover portion 58 is operated to the open position (see FIG. 8), the connector section 39 is exposed to the left side of the hood 4 via the opening 57 of the hood 4. The worker connects the charger (not shown) of the external power source (not shown) to the connector section 39 via the opening 57 of the hood 4 from the left side of the hood 4. Accordingly, the charger of the external power source is connected to the connector section 39 in such a manner as to extend along the left-right direction, and the battery 27 is charged with power supplied from the external power source via the connector section 39.

In FIGS. 7 and 8, the connector section 39 may also be attached to a lower portion of the right frame 51 in such manner as to face rightward, and the opening 57 and the cover portion 58 may also be provided in a lower region of the front portion of the right side face portion 42 (a lower region of a right portion of the front grill 46) of the hood 4.

Correspondence with claims regarding connector section in second variation of embodiment of the invention

According to the above configuration, the tractor includes the connector section 39 to which a charger is connected to charge the battery 27, and the connector section 39 is disposed in the front portion of the hood 4.

The hood 4 includes the top portion 40, the front face portion 41, the right side face portion 42, and the left side face portion 43. The connector section 39 is disposed in the lower region of the front portion of the right side face portion 42 or the lower region of the front portion of the left side face portion 43 and oriented in such a manner that the charger is connected along the left-right direction.

The connector section 39 is within the hood 4. The right side face portion 42 or the left side face portion 43 includes the cover portion 58 at a position corresponding to the connector section 39, and the cover portion 58 is openable and closable and allows the charger to be connected to the connector section 39.

### Third variation of embodiment of the invention

An engine work vehicle may be produced by eliminating the battery 27, the inverter 28, the motor 29, etc., in the configuration shown in FIGS. 7 and 8 and installing an engine (not shown) on the front portions of the body frames 10.

In this case, it is possible to leave the opening 57 of the hood 4, eliminate the cover portion 58, and dispose an exhaust port of an exhaust pipe (not shown) extending from the engine in the opening 57 of the hood 4 to discharge exhaust gas from the engine to the outside via the opening 57 of the hood 4.

### Fourth variation of embodiment of the invention

In the configurations shown in FIGS. 1 to 8, a configuration is also possible in which the connector section 39 is directly attached to the front portion of the hood 4, rather than being disposed within the hood 4. According to this configuration, the connector section 39 is exposed, and therefore, it is preferable to provide the connector section 39 with a cap (not shown) for dust proofing and water proofing, which is attachable to the connector section 39 and detachable therefrom.

### Fifth variation of embodiment of the invention

Crawler travel devices (not shown) may also be used as travel devices instead of the rear wheels 2.

Crawler travel devices (not shown) may also be used as travel devices instead of the front wheels 1 and the rear wheels 2.

### Industrial Applicability

The present invention is applicable to not only a tractor but also other electric work vehicles such as an electric cart and a transport vehicle.

## Claims

1. An electric work vehicle comprising:
a body (3) provided with a travel device (1,2);
a battery (27);
a motor (29) configured to operate with power supplied from the battery and supply motive power to the travel device;
a hood (4) in a front portion of the body;
a driving section (5) behind the hood; and
a connector section (39) to which a charger is connected to charge the battery,
wherein the connector section (39) is in a front portion of the hood (4).

2. The electric work vehicle according to claim 1, wherein
the battery (27) is within the hood (4).

3. The electric work vehicle according to claim 1 or 2, wherein
the hood (4) includes a top portion (40), a front face portion (41), a right side face portion (42), and a left side face portion (43),
a right headlight (44) and a left headlight (45) are provided in a right region and a left region of an upper portion of the front face portion, and
the connector section (39) is disposed between the right headlight and the left headlight and oriented in such a manner that the charger is connected along a front-rear direction.

4. The electric work vehicle according to claim 3, wherein
the connector section is within the hood (4), and
the front face portion (41) includes a cover portion (48) at a position corresponding to the connector section (39), the cover portion being openable and closable and configured to allow the charger to be connected to the connector section.

5. The electric work vehicle according to claim 1 or 2, wherein
the hood (4) includes a top portion (40), a front face portion (41), a right side face portion (42), and a left side face portion (43), and
the connector section (39) is disposed in a front portion of the top portion and oriented in such a manner that the charger is connected along a front-rear direction or an up-down direction.

6. The electric work vehicle according to claim 5, wherein
the connector section is within the hood (4), and
the top portion (40) includes a cover portion (55) at a position corresponding to the connector section (39), the cover portion being openable and closable and configured to allow the charger to be connected to the connector section.

7. The electric work vehicle according to claim 1 or 2, wherein
the hood (4) includes a top portion (40), a front face portion (41), a right side face portion (42), and a left side face portion (43), and
the connector section (39) is disposed in a lower region of a front portion of the right side face portion or a lower region of a front portion of the left side face portion and oriented in such a manner that the charger is connected along a left-right direction.

8. The electric work vehicle according to claim 7, wherein
the connector section (39) is within the hood (4), and
the right side face portion (42) or the left side face portion (43) includes a cover portion (58) at a position corresponding to the connector section (39), the cover portion being openable and closable and configured to allow the charger to be connected to the connector section.
